# EUROPEAN PATENT APPLICATION

(11) **EP 3 483 417 A1**
(43) Date of publication of application: **15.05.2019**
(21) Application number: 18204308.3
(22) Date of filing: 05.11.2018
(51) Int. Cl.: F02K 1/34, F02C 7/24

(54) **HIGH TEMPERATURE ACOUSTIC LINER**

(30) Priority: 09.11.2017 US 201715807920
(71) Applicant: General Electric Company, Schenectady, NY 12345 (US)
(72) Inventor: FAIR, Geoffrey Eric, Cincinnati, OH 45215-1988 (US); YOUNG, Craig Douglas, Cincinnati, OH 45215-1988 (US); YOUNG, Kevin Andrew, Cincinnati, OH 45215-1988 (US)
(74) Representative: Openshaw & Co.

(57) **Abstract**

A durable light weight, high temperature acoustic ceramic matrix composite (CMC) liner system. A thin ceramic matrix composite skin, also referred to as a facesheet (106), forms an outer layer of a cell (104) in the CMC liner system, forming the boundary with the flow of hot gases in the exhaust. A backplate (108) forms the opposite boundary for the cell. The truss structure is formed between the backplate and the facesheet and provides the cell with strength. When the CMC system replaces the metal liner, the backplate thickness is increased so that it is about the thickness of the liner system that it replaces. The truss structure extends between the backplate and the facesheet, forming channels or volumetric spaces. These channels or volumetric spaces are filled with high temperature air permeable acoustic materials (120) that attenuate sound propagated by cooling air in the acoustic range.

## Description

### FIELD OF THE INVENTION

The present invention is directed to a thin, lightweight structure, and more specifically to a thin, lightweight high temperature material with sound absorbing capabilities in a structure having applications for attenuating sound emanating from a noise source.

### BACKGROUND

An aircraft engine operates to provide power to an aircraft and thrust to propel an aircraft. Air is drawn into the front of the engine and compressed to high pressures in the compressor section of the engine. Some of the air is mixed with fuel in the combustor section of the engine, where the fuel is combusted. Air not used for combustion is provided as oxygen to the cabin, for cooling hot sections of the engine and other purposes. Hot gases of combustion rapidly travel through the turbine section of the engine, where they are used to rapidly rotate the turbines. An engine includes at least one turbine section and may include more. Each turbine section further includes vanes to direct the flow of the hot gases of combustion through the turbine section. Hot gases passing through the engine lose significant kinetic energy passing through the turbine. The turbines provide power to turn the compressor section of the engine and to provide electrical power. The remaining gases, although not as energetic as when they are expelled from the combustor, are channeled to the exhaust system to provide thrust to propel the aircraft forward. For high performance aircraft, additional thrust can be provided when the exhaust gases from the turbine are insufficient to quickly accelerate the aircraft and to propel it at a desired speed. The additional thrust is provided by an augmenter, sometimes referred to as an afterburner because of its position in the exhaust. The augmenter injects fuel and air into the exhaust system for short periods of time where it is burned to augment the thrust provided by exhaust gas. The combustion of fuel to produce hot gases of combustion, the operation of the turbines and the discharge of exhaust gases from the engine exhaust all produce high levels of noise.

Exhaust systems utilize a duct to channel the hot gases of combustion between the turbine and the rear of the engine. Because of the high temperatures of the combustion gases, a metal liner has been utilized that is spaced from the duct. The liner is positioned radially from the duct by a hanger or a plurality of hangers. As used herein, radially is a term that refers to a component with respect to its position from the centerline of the engine. The combustion gases can reach temperatures above the melting temperature of the material comprising the liner. Thus, the liner may be coated with a thermal barrier coating. Cooling air from the compressor also is passed between the liner and the duct to remove heat from the backside of the liner. In addition, liner design includes a plurality of apertures that provide cooling air from the area between the liner and the duct to the side of the liner that is in the flow path of the hot gases of combustion. This method of cooling a component, here the liner, is referred to as film cooling or transpiration cooling.

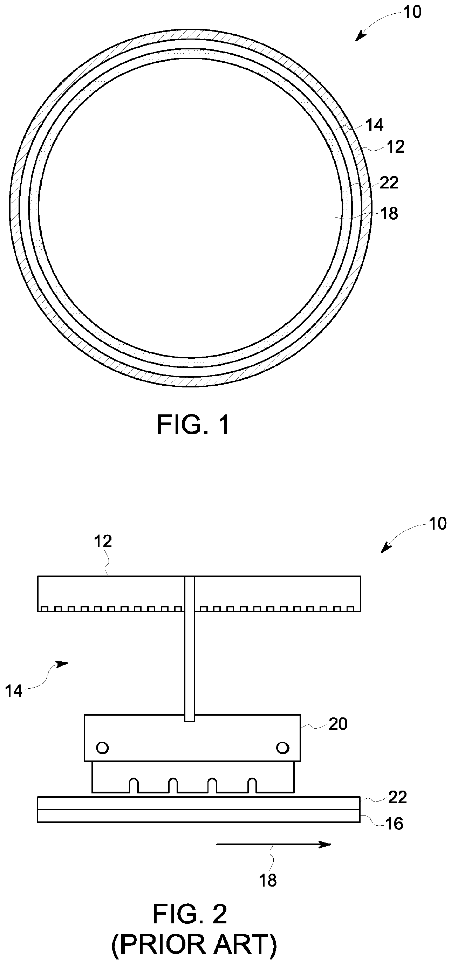

The liner, the duct and the hanger of a jet engine exhaust system are usually made of metallic materials, which are conduits for sound. It is desirable to mitigate, to the maximum extent possible, sound propagated by the metallic materials comprising the exhaust system to limit the sound propagated to the environment as noise. A partial cross-section of a prior art exhaust system depicting a metal liner 22 coated with a thin thermal barrier coating (TBC) 16 suspended from a duct 12 with a hanger 10 is shown Figure 2. Cooling air from a fan section of the engine (not shown), flows in channel 14 between duct 12 and liner 22. Because of the temperatures of the hot gas 18 flowing in the exhaust, the melting temperature of the material comprising the liner would be exceeded but for the thermal barrier coating 16 and the cooling air flowing in channel 14, improving the temperature capability of liner 22. However, cooling air flowing in channel 14 transmits sound from a metallic liner to a duct and outward with little or no attenuation.

Recent attempts to improve the performance of high temperature liner systems have resulted in the development of thick brick-like ceramic structures bonded to the metal liner surface. While these ceramic bricks provide some temperature improvement and some sound attenuation, they provide a significant weight penalty to the engine and hence to the aircraft, and can reduce the effective area of the exhaust, affecting engine performance. In addition, the bonding methods used to bond these structures to the liner are suspect for long periods at elevated temperatures. Also, these ceramic bricks lack the necessary characteristics to sufficiently reduce sound attenuation.

What is needed is a system that has capabilities of improving the temperature capabilities of the exhaust system while attenuating some sound generated by a gas turbine engine such as a jet engine without adding additional weight to the exhaust system. Such a system should not only be light in weight, but also should have high temperature capabilities so that it may be utilized in the exhaust section of the aircraft engine. Preferably, the component design can withstand elevated temperatures of operation for extended periods of time. As used herein, elevated temperatures of operation include temperatures in excess of 400° F.

### BRIEF DESCRIPTION

A durable light weight, high temperature structure is provided. The structure finds particular use as a liner system or as a liner attachment in an exhaust system, eliminating the hanger and liner system used in the prior art, although attachment to the liner system, or to the duct when the metal liner is eliminated, is retained. When used in an engine exhaust system, a passageway between the duct and the ceramic liner system supplying cooling air to the liner system may be provided. When used in an exhaust system, the ceramic liner system comprises a complex arrangement of ceramic layers formed into a plurality of cells. Each cell is formed of high temperature ceramic material which, when cured, forms a high temperature structure with an internal volume. This volume may be filled with a light weight ceramic material having sound absorption capabilities and high temperature capabilities. The ceramic liner system overlies and is attached to the duct, the ceramic liner system being located between the duct and the exhaust gas flow path and suspended from the duct. The ceramic liner system also provides thermal protection to the metal exhaust liner when the exhaust liner is retained.

The ceramic liner system comprises a facesheet, a backplate and a truss structure extending between the facesheet and the backplate. The truss structure provides strength to the ceramic liner system while forming a plurality of channels which are filled with a light weight porous material which can interact with sound to attenuate it. The light weight porous material allows for passage of cooling air from the cooling air passageway between the duct and the liner and is circulated through the channels to remove heat from the system, thereby preventing heat build-up within the liner system. The circulation of air through the porous material also is an important feature for sound attenuation. The truss structure formed from a ceramic matrix composite (CMC) also may serve as the point of attachment of the liner system to the duct when attachment is mechanical, cells of the liner system attached to the duct by attachment devices. The cross section of the channels in the truss structure can be varied based on exhaust design so that heat build-up is avoided. The channels may be aligned substantially parallel to the axis of the engine, that is, the channels and the flow of cooling air through the channels are oriented from forward to aft in the engine parallel to the flow of the hot exhaust gases through the exhaust system, although the direction of cooling air flow is not restricted to flow in this direction. The channels or volumetric regions formed in the truss structure are filled with fibers, porous felt, or porous foam.

A thin ceramic matrix composite skin, also referred to as a facesheet, forms an outer layer of the cells in the liner system, forming the boundary of the cells with the flow of hot gases in the exhaust. The system also includes an additional ceramic matrix composite skin, identified as the backplate. The truss structure is formed between the backplate and the facesheet. When the ceramic liner system replaces a metal liner, the backplate thickness is increased so that it is about the thickness of the liner system that it replaces. When the backplate is used in conjunction with a metal duct liner, the backplate comprises 2-4 plies. The truss structure extends between the backplate and the facesheet, forming channels or volumetric regions. These channels or volumetric regions are filled with high temperature fibers, felt or foam survivable at high temperatures.

Any heat build-up in the ceramic liner system from heat transfer due to interaction with the hot gases of combustion may be removed by cooling air which is channeled through the truss structure. The cooling air flowing in the channel between the duct and the ceramic liner system may be channeled into the cells of the ceramic liner system by providing apertures or slots in the backplate, the apertures or slots providing cooling air from the passageway into the porous ceramic felt, foam or fiber-filled channels. The channels, being filled with acoustic porous foam, felt or fibers, allow the cooling air to move through the channels, usually from fore to aft and parallel to the axis of the engine. Sound transferred through the liner is carried by the cooling air. The cooling air interacts with the porous acoustic material to attenuate the sound transmitted by the cooling air. If desired, apertures may be formed through the facesheet allowing cooling air to exit the cells and into the hot gas flow, thereby providing transpiration cooling to the ceramic liner system.

The weight of the exhaust section may be reduced by using the present invention. The light weight, ceramic liner system also reduces weight by removing hangers and metal liners, and with the proper selection of materials, is capable of surviving the temperatures experienced in the exhaust. The use of the ceramic system of the present invention is not limited to the exhaust system and may be utilized in other sections of the engine or on other structures where high temperature operation is experienced and sound is transmitted through the structures.

Other features and advantages of the present invention will be apparent from the following more detailed description, taken in conjunction with the accompanying drawings which illustrate, by way of example, the principles of the invention.

### BRIEF DESCRIPTION OF THE DRAWINGS

Figure 1 represents a view of an aircraft engine exhaust from the rear of the engine.
Figure 2 depicts a view of a prior art duct and hanger system used to suspend a liner from a duct.
Figure 3 represents a view of an aircraft engine exhaust from the rear of the engine with the ceramic liner system of the present invention attached to the engine liner.
Figure 4 depicts an assembly of four eggcrate cells of a ceramic liner system.
Figure 5 is an exploded view of one of the eggcrate cells of Figure 4 highlighting the eggcrate construction.
Figure 6 depicts an assembly of two channel cells of a ceramic liner system.
Figure 7 is a cross sectional view along view 7-7 of one of the channel cells of Figure 6
Figure 8 depicts the arrangement of the side sections and the pad section of cell 1 04.

### DETAILED DESCRIPTION

A ceramic liner system having applications in elevated temperature sections of aircraft is set forth herein. Figure 1 depicts a view of a typical engine exhaust 10 from the rear of an aircraft. The features depicted in the Figures are not to scale. The engine exhaust is depicted as having a circular cross section, but the invention is not limited to engines of this design and is intended for use in engines having rectangular, trapezoidal cross sections and other geometries. The ceramic liner system of the present invention thus is adaptable to engine exhausts having any geometry.

Referring again to Figure 1, the engine exhaust includes a duct 12. An exhaust liner 22 resides inboard of duct 12 and forms the hot gas flow path boundary, as the hot gas flow path 18 passes through the interior of the engine. As used herein, hot gas flow path and exhaust gas flow path are used interchangeably. Exhaust liner 22 may comprise a metallic substrate. Sound initiating in the engine fore of the exhaust is propagated into the exhaust by the hot exhaust gases. One or more coatings may be applied to exhaust liner 22 forming a barrier between the hot exhaust gases in the exhaust gas flow path and the metallic substrate. These coatings include one or more of thermal barrier coatings (TBC's) and environmental barrier coatings (EBC's) that protect the metallic substrate from the hot, corrosive and oxidative gases flowing in the exhaust gas flow path 18. As depicted in Figure 1, liner 22 includes these applied coatings. Sound (noise) initiating in the engine fore of the exhaust is propagated into the exhaust by the hot exhaust gases, some of the noise radiating through the coated metallic liner.

Figure 2 depicts a prior art hanger assembly 10 referred to herein simply as hanger 10, not visible in Figure 1, which provides the structure that enables engine liner 22 to be suspended in the engine exhaust from the exhaust duct. Cooling air flows around the hangers in cooling air channel 14, cooling the back side of the engine liner. Cooling air is bled from cooling air passageway 14 through apertures (not shown) formed in liner 22 and coatings applied to liner 22 to provide transpiration cooling to liner and coatings. The cooling air, the hangers as well as the duct all propagate sound to the surrounding environment.

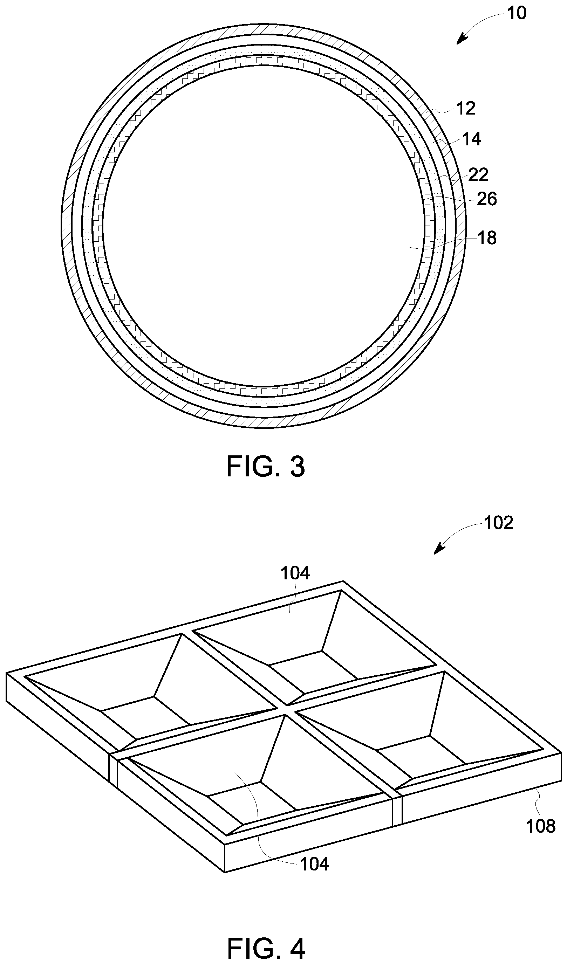

In one embodiment, the present invention replaces liner 22 and coatings as well as hangers 10 with a light weight acoustic ceramic liner system. In a modification to this embodiment, air channel 14 may also be eliminated. In this embodiment, the ceramic liner system is attached to duct 12 by any attachment system that can survive the temperature and stresses in an exhaust system. In one embodiment, the ceramic liner system is attached by a simplified bolting system, and in its broadest embodiment, occupies substantially the same space as the current engine liner 22 and coatings that it replaces, as shown in Figure 1. In one embodiment, the ceramic liner is chemically attached to duct 12 using for example, a high temperature adhesive, replacing both liner 22 and air channel 14. In another embodiment, the ceramic liner system may be attached to the existing engine liner, allowing coatings currently applied to the liner to be eliminated. In yet another embodiment, the ceramic liner system may be attached to the liner 22, as shown in Figure 3, so that the ceramic liner system becomes an additional structure within the exhaust. The environmental and TBC coatings that may have been utilized may be retained or eliminated, depending upon engine temperatures, engine design and the overall effectiveness of the ceramic liner system.

One of the purposes of the ceramic liner system is to reduce the weight of the engine while also reducing sound emanating from the engine. The ceramic liner system can implement a number of constructions that allow it to accomplish its purpose. Several of these constructions, depicted generally as 26 in Figure 3 as an attachment to the existing engine liner 22 are set forth. The ceramic liner system is not limited to these constructions. As previously noted, while it is preferred that the ceramic liner system set forth herein replace liner 22 and associated coatings, in which case metal liner 22 is omitted from the construction shown in Figure 3, the ceramic liner system 26 set forth herein also may be used in conjunction with metal liner 22, the coatings being optional. In either circumstance, the ceramic liner system comprises a plurality of cells. The number of cells may vary depending on the engine size, but at least two cells are utilized.

Regardless of the configuration of the cells, the cells have some common elements. These include a facesheet that forms a boundary with the hot exhaust gases. A backplate is opposite the facesheet and is between the facesheet and the duct. The backplate is also a CMC material and preferably has high temperature capability. A truss structure extends between the backplate and the facesheet, the truss structure providing channel, cells or volumetric regions between the backplate and the facesheet. The truss structure provides strength to the cells and is also a high temperature CMC material.

The channels or volumetric regions are filled with a sound attenuating material. The sound attenuating material must be porous, allowing cooling air to flow through it. The sound attenuating material selected is very much dependent upon the temperature experienced by the cells. When the volumetric regions are used in an exhaust and are cooled by cooling air such that the temperature of the volumetric region does not exceed 400° F, polymeric fibers such as fiberglass, glass wool or PVC fibers may be used. When the volumetric regions are cooled, but the temperature of the volumetric region is expected to be greater than 400° F, then ceramic fiber such as ceramic wool, which includes, for example, alumina-mullite fibers, aluminum silicate fibers, alumina fibers, stainless steel wool and SiC fibers may be used. When the volumetric regions are to be used in cells that are to replace an engine liner and which therefore may be exposed to the hot gases of combustion and/or temperatures greater than about 1800° F (1000° C), the volumetric regions are restricted to ceramic wool such as aluminosilicate fibers, alumina-mullite fibers, alkaline earth silica wool, polycrystalline wool, which is greater than 70% by weight A1203 produced by sol-gel methods, and alumina fibers as stainless steel wool and SiC fibers will degrade in the hot, corrosive, oxidative exhaust gas environment. These fibers may be assembled into a felt material or fabricated into a porous foam for use in the volumetric regions. The various materials having sound-absorbing capabilities are referred to as acoustic materials, and the fibers are referred to as acoustic fibers, each subject to temperature and environmental limitations.

Once the cells are filled with acoustic material, the cells may be attached to the duct. The facesheet comprises a high temperature ceramic matrix composite (CMC) material. The high temperature capability is required since the facesheet is in contact with the hot exhaust gases. The underlying structure includes porous acoustic materials that are within the channels in the truss structure, the porous acoustic materials being permeable to cooling air. These porous acoustic materials, when properly selected as set forth above, have sound attenuating capabilities, interacting with sound waves entering the structure transmitted by the hot gas flow in the exhaust and transferred to the cooling air. The sound propagated by the cooling air is attenuated by contact with the acoustic material.

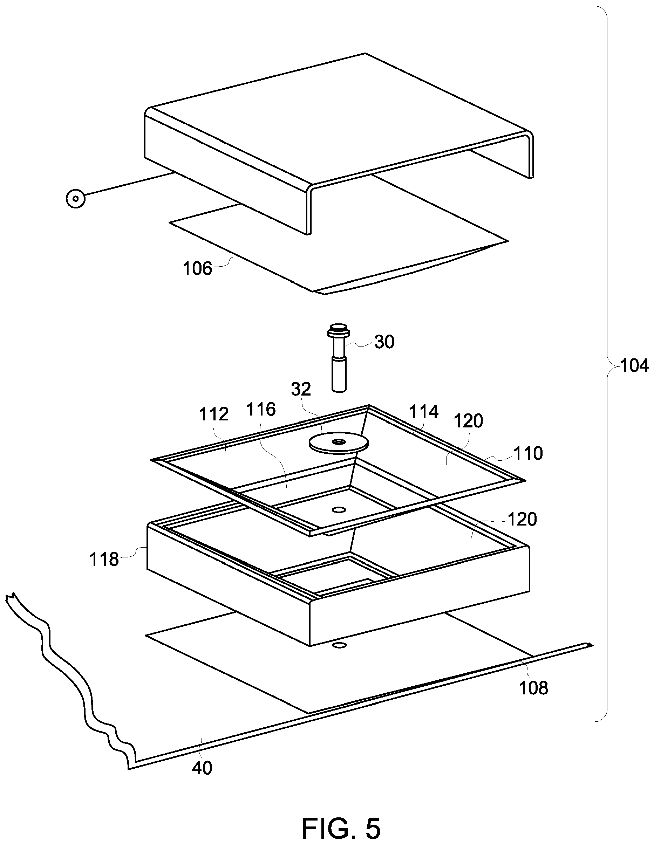

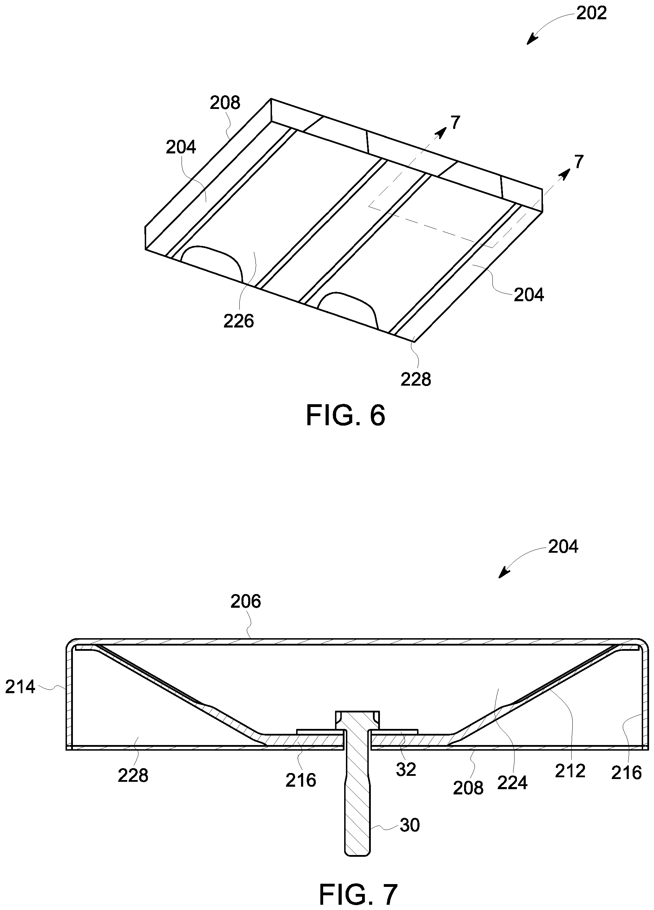

There are two preferred styles of cells used in the ceramic liner system of the present invention: cells having an eggcrate structure depicted in Figures 4 and 5; and cells having a channel structure depicted in Figures 6 and 7. Other structures incorporating the essential components of the cell design may also be possible, All cells are fabricated from high temperature ceramic matrix composite (CMC) material. The ceramic composite material is provided as green sheets that can be cut plies. The plies can be further cut into any shape and laid-up prior to curing. Although the temperature experienced by the facesheet in contact with the hot exhaust gases is usually about 1800° F in current engine designs, transient exhaust gas temperatures may reach as high as 2200° F in certain locations in current engine designs. Ox-Ox materials such as aluminosilicate fibers in an aluminosilicate matrix can survive temperatures as high as 2500 ° F, depending on the application so that future engine designs may also be accommodated by a structure comprising Ox-ox materials. The temperature experienced by the backplate in contact with cooling air can be as low as about 150° F. The temperatures of 150-1800° F establish the limits for the temperature gradient for current design purposes, with exhaust temperatures of at least about 1800° F, as Ox-Ox materials can be designed for higher exhaust temperatures, up to 2500° F, and with temperature transients up to 2500° F. However, in normal operation in current engine designs, the temperature of the cooling air is usually about 400° F, so the normal operating temperature gradient is usually much less that the design temperature gradient. The coefficients of thermal expansion for the materials used in the system and the system design must be survivable for both the operational temperature gradients and design temperature gradients that may occur across the thickness of the liner, which can vary depending on engine design from less than an inch (0.5 inches) to about four inches, but typically is about one inch.

Any CMC material that can withstand these temperatures and that can survive contact with the hot exhaust gases, which is oxidative and corrosive, may be used. Acceptable CMC materials include, but are not limited to aluminosilicate fibers or silicon carbide fibers in aluminosilicate matrix materials, silicon carbide matrix materials, silicate matrix materials or silicone matrix materials (which yields a silica matrix after firing) and combinations of these materials. As used herein, Ox-Ox materials refer to ceramic fibers embedded in one of the aforementioned matrix materials. A fiber material provided as woven fabric of alumina-mullite fibers, which subsequently may be infiltrated with a matrix slurry to form green CMC plies is a prepreg ply composition. Once impregnated with matrix material, the plies have a substantially uniform thickness that depends on the denier of the fabric. A preferred 1500 denier yields plies in the thickness range of 8.5-9.5 mils, and usually about 9 mils in thickness. A higher denier will yield a thicker prepreg ply as the thickness is dependent on denier. Prepreg plies having fabric with different denier and different thicknesses may be used together in assembling a structure. Green prepreg plies having alumina-silica-yielding matrix may be formed into a preselected shape and then pressed at 200-700 ° F, nominally 300°F, under pressure, preferably of about 200 psi to stabilize and cure the composite ply structure. This cure is preferably performed in an autoclave, although it may be accomplished by any other technique that provides fully dense structure, such as vacuum bagging. Complete conversion of the ply to a sintered ceramic may be accomplished by sintering the ply to nominally 1600°F for about 2-8 hours.

Figure 4 depicts one embodiment of the cells of the present invention, which is an assembly 102 of four eggcrate cells, each cell 104 having a structure referred to herein as an eggcrate structure due to the arrangement of the plies used to construct the cell. Each cell is shown as flat, but it will be understood by those skilled in the art that the cells will be radiused or otherwise contoured to match the radius or contour of the engine in which they will be installed. Thus, the cells, for example, will be radiused when the engine is cylindrical, but will be flat when the engine is rectangular. The cells may assume any arcuate shape, as the green CMC plies which form the basic elements of the cell are all pliable and easily shaped when in the green condition. The structure of the cells can be customized to shape during lay-up of the plies from which it is comprised by engine-specific tooling to match the shape of any engine. Subsequent curing permanently sets the geometry of the cells. The cells are shown as flat to illustrate the basic construction principles. Also, the assembly is shown in Figure 4 as four square cells, each having equally dimensioned edges, for example 6 inches yielding a 12 inch square when assembled. The cell size is not so restricted, and may be and formed of larger sizes and shapes. However, to cover large areas of an engine exhaust, a plurality of cells are assembled in an abutting arrangement to cover the exhaust area. The six inch square edge shown is likely the smallest practical edge for most engine applications. In many applications, the cell size may be larger. For example, four cells may be utilized for an engine design, each cell forming a quadrant of an exhaust engine. The cells when installed may form a liner system for the entire engine exhaust. However, a plurality of smaller cells assembled in the abutting arrangement to cover the engine exhaust is preferred.

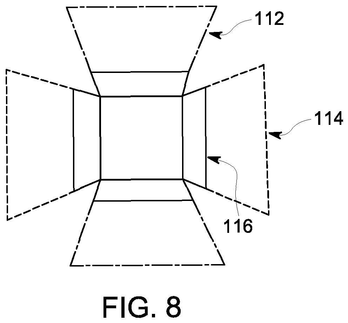

Figure 5 is an exploded view of one of cells 104 of Figure 4. Each cell comprises a facesheet 106. The facesheet 106 is laid-up from two plies of CMC material. A backplate 108 is depicted opposite the facesheet 106. The backplate 108 is laid-up from two to ten plies, preferably two to six plies of CMC material. When the CMC liner system replaces metal liner 22 and coatings 16, backplate 108 is fabricated so as to be thicker, thus utilizing a higher number of plies. However, when the CMC liner system is used in conjunction with metal exhaust liner 22, a reduced number of plies may be used. Also shown in the exploded view of Figure 5 is eggcrate section 110 which extends between facesheet 106 and backplate 108. The construction of eggcrate section is shown in detail in Figure 8. Eggcrate section comprises at least two bowtie sections, each bowtie section extending at angles to one another and between facesheet and backplate. As shown in Figure 8, eggcrate section 110 comprises a first bowtie section 112 and a second bowtie section 1 14, each oriented at 90° to one another. Each bowtie section 112, 114 is comprised of four plies extending at a preselected angle between facesheet 106 and backplate 108. While the preselected angle may be any angle, preferred angles are between 30-60°. Bowtie sections overlap each other in a pad region 116. Pad region 116 is comprised of 4 additional plies of CMC material. Pad region 116 is coextensive with bowtie sections 1 12, 114 along a portion of the angled region between facesheet 106 and backplate 108. The thickness of the plies in the pad region 116 thus is at least 14 plies of CMC material. Eggcrate section and pad section are nested into box 118. In Figure 5, box 1 18 has four sides extending between facesheet 106 and backplate 108 and box 118 may be constructed of at least one ply of CMC material or of ceramic fiber paper such as those available from UNIFRAX 1 LLC of Niagara Falls, NY. Ceramic fiber papers comprise randomly oriented aluminosilicate fibers in a nonwoven matrix.

For an eggcrate cell such as shown in Figures 4, 5 and 8, the truss structure includes facesheet 106, backplate 108, eggcrate section 110 and pad region 116. The space between box 118 and truss structure is filled with acoustic fiber. The space within truss structure above pad region 116 is also filled with acoustic material 120, such as acoustic fiber, foam or felt.

The acoustic material is an important aspect of the present invention as it provides the CMC structure with sound absorbing capabilities. Acoustic material must be permeable to air. Acoustic material also may provide CMC structure with insulative properties as acoustic material incorporated into the CMC structure utilized in an exhaust system should have high temperature capabilities in order to survive the high temperature environment in an aircraft engine exhaust system. In one embodiment of the present invention, acoustic fiber is provided as chopped fiber dispersed in a ceramic matrix. The chopped fiber provides a preselected absorptivity of sound. Sound observable by human beings generally is in the 20-22 KHz frequency range, also referred to herein as the acoustic range or band. Preferably, the acoustic fiber is chopped aluminosilicate fiber having a nominal length of about 20-25 millimeters and a diameter of about 8.5-14 gm. This size of aluminosilicate fiber is used in the best mode for practicing the present invention. But aluminosilicate fibers of different lengths and diameters, but with different preselected acoustic absorptivity that provide the same preselected acoustic absorptivity as fibers having uniform acoustic absorptivity may be mixed together to provide a blend of fibers, and such a blend also may also be used as a substitute for or in conjunction with chopped fiber having a single, uniform acoustic absorptivity, but which produces the same sound attenuation. The chopped aluminosilicate fiber is dispersed and bonded together by a ceramic matrix that includes a silica or silicate, a phosphate or an aluminosilicate, the bonded matrix having a predetermined acoustic absorptivity. As used herein, acoustic absorptivity is the ability of a section of material that includes a plurality of fibers to attenuate sound across the sound spectrum observable by human beings or of a particular frequency or range of frequencies within this sound spectrum. Attenuation does not require the total removal of sound, but rather a reduction is dBs in the sound after interaction with the acoustic material.

In one embodiment, chopped acoustic fibers having varying acoustic absorption may be blended together in a uniform distribution to provide an acoustic component that has a uniform absorptivity. The blended acoustic fibers may be assembled into the cell(s) to fill channels and volumetric regions within the truss structures. In this embodiment, the chopped acoustic fibers provide an isotropic absorption.

In other embodiments, the acoustic material can be applied to the cells by varying its absorptivity across the thickness of the CMC liner system so that sound absorption is graded, that is, different thicknesses absorb different frequency bands in the acoustic range, the thickness of the CMC liner system being measured perpendicular to the engine centerline from the gas flow path boundary to the backplate. When the acoustic material is graded, each preselected thickness is designed to interact with a predetermined frequency or range of frequencies within the acoustic range. While the acoustic material may be graded into at least two layers having different absorptivities, it is preferred that it be graded into more than two layers having different absorptivities in each layer, each layer having a preselected thickness. Layers each having a preselected absorptivity may be fabricated and assembled to form a plurality of layers and assembled into the cells. This arrangement provides the designer with flexibility in tailoring the CMC liner system so that it may interact with the dominant characteristic frequency ranges known to be produced by an engine design.

Aluminosilicate fiber is the preferred acoustic fiber. Grading is accomplished by grading the acoustic fiber in respective layers by varying the acoustic absorptivity across the thickness. Grading the absorptivity of the acoustic fiber can be accomplished by any convenient method. For example, aluminosilicate fiber having substantially the same attenuation response to a frequency range can be utilized in fabricating a layer. Grading the absorptivity across the thickness of the CMC liner system involves grading the amount of acoustic fiber used in any layer. By changing the concentration of fiber in a layer, or by varying the length of fibers in different layers, the absorptivity of the layer can be varied. Alternatively, in a preferred embodiment, acoustic fiber comprising different compositions of material, for example aluminosilicate fibers and polycrystalline wool, and each having different absorptivity can be obtained and used in different layers.

In addition to high temperature acoustic fibers, fiberglass insulation may be added to provide strength to the felt produced by the process. Any commercially available standard fiberglass, such as Owens-Corning Pink® may be used. Cellulose fiber is added as compressible filler, providing the felt with compressibility prior to firing. It also is a dispersing or mixing aid. During forming of the felt, and prior to sintering, this compressible filler assists in uniformly dispersing the acoustic fiber. A preferred cellulose fiber is hamster's litter. These materials are added so that their final density in the felt, after drying, is about 1.8 g/in3 of silicon carbide fiber, about 0.15 g/in3 of fiberglass fiber, and about 0.36 g/in3 of cellulose fiber. Of course, after sintering, the cellulose fiber and the fiberglass, being oxidizable, will bum off, adding to the porosity and permeability of the felt.

When making a felt or a foam, the ceramic matrix material used to infiltrate the chopped fiber comprises submicron refractory particles, preferably alumina particles, in a silicate to form a boria-alumina-silicate matrix. Preferred alumina particles are Ceralox™ HPA or SM8™ available from Baikowski International of Charlotte, N.C., both superground alumina particles. Any reactive ceramic powders or glass may be substituted for alumina or used in combination with the alumina. The alumina-silicate matrix is formed around the acoustic fibers. Submicron alumina particles in a preferred embodiment are mixed with a glass-forming silicon-based material and boric acid that forms a binder for the refractory oxide powder. The silicon-based material preferably is silicone, such as SR355, a silicone composition that can be obtained through General Electric Company or Dow Corning 249 available from Dow Corning Corporation of Midland, MI. These silicones initially form a silicon polymer that yields water as a byproduct of its formation by curing and/or cross-linking, but is not so viscous and sticky as to inhibit the formation of a tape. The water must be removed from the matrix before or during the drying process of the composition of the present invention. This oxidizable silicon-based material forms a portion of the matrix of the composition upon curing. The silicon polymer will convert completely to silica upon firing at sufficiently elevated temperatures. The carbon component of the SR355 is oxidized as carbon monoxide or carbon dioxide gas and is driven from the matrix. Boric acid may be added to form a borosilicate glass with an initial low melting temperature. In a preferred embodiment, the ratio of alumina:silica:boric acid in the slurry can vary from 1:8:16 to 1:4:8.

An evaporable solvent also acts as the carrier fluid in forming the slurry of the present invention and is used with silicone materials such as silicone SR355 to control its viscosity. The characteristics of an acceptable evaporable solvent are that it will not adversely affect the characteristics of the other materials used in the present invention, and that it will evaporate quickly without the application of extreme heat. A preferred solvent is alcohol, such as, for example, ethyl alcohol or isopropyl alcohol.

In one embodiment, the composition of the slurry comprises about 800-1200 g alumina, about 400-600 g of silicone, about 50-150 g of boric acid and sufficient solvent so that the slurry is satisfactorily fluid to infiltrate the felt material. A preferred composition of the slurry by weight is about 1000 g alumina, about 576 g silicone and about 100 g boric acid. In this preferred embodiment, 1700-2700 ml, usually about 2200 ml is the amount of solvent, an alcohol that is sufficient to provide the requisite fluidity for infiltration of the felt, although the fluidity may vary depending upon the felt composition. The amount of solvent is varied to produce the fluidity required to infiltrate the felt.

Evaporation of the solvent facilitates the curing of the materials. The evaporable solvent is desirably environmentally friendly, as determined by existing environmental and workplace regulations. In particular, alcohols have been found to work with the materials of the present invention. Alcohols are much more environmentally desirable and are not carcinogenic. Examples of typical alcohols suitable for use as a solvent include ethyl alcohol, also referred to as ethanol, and isopropyl alcohol and mixtures of these alcohols. A preferred alcohol is a mixture of 40% ethanol and 60% isopropyl alcohol, referred to hereinafter as Ethyl 40%Isopropyl 60%. While acetone and methyl alcohol, also referred to as methanol, are acceptable performance substitutes, they are not as friendly and should only be used when necessary and the preferred alcohols are not otherwise available.

A block of air-permeable felt material having an attenuating sound across a preselected range may be formed from chopped acoustic fiber, either all attenuating sound across the same frequency range or a blend of fibers of attenuating sound across different frequency ranges, as discussed above. However, the block of felt material 10 itself fabricated by either technique has a substantially uniform absorptivity. The block is formed by carefully weighing a quantity of chopped acoustic fiber of preselected absorptivity required to provide the block with preselected absorptivity. The chopped fiber is mixed with a soapy water solution to form a mixture. The soap is a surfactant. The solution is mixed with fibers to uniformly disperse the fibers in the solution while coating the fibers. The mixed solution is a frothy or bubbly mass. The frothy mixture is poured into a mold, which is evacuated under a low vacuum to remove any remaining bubbles, water and soap. A defoaming agent may be used to aid in the removal of excess soap. The defoaming agent may be sprayed onto the frothy mixture as needed. After further drying, the block of felt material is formed and removed from the mold. This block of material comprising essentially chopped fibers is porous, but sufficiently firm that it can be handled and cut. Additional blocks of felt material, each having preselected absorptivity, can be formed in the same manner. The density of the acoustic fibers in each block likely will vary, depending upon the concentration of fiber to provide the required absorptivity for the block. The felts produced by this method can vary in thickness. The nominal thickness ranges are about 0.5 inches in the final processed thickness, although thicker and thinner fiber blocks have been produced. When the absorption of the cells in the CMC structure is designed to be isotropic, the molds used may have the same shape as the channels or volumetric regions of cells 104, 204, so that the blocks may be removed from the molds and inserted into the channels or volumetric regions of cells 104, 204, filling the cells with acoustic material.

In order to form inserts for the channels or volumetric regions of cells of varying absorptivity, after forming felt blocks, each block having a different absorptivity in the matter as described above, the felt may be cut into thin plies having thicknesses in the range of, for example about 1/32 inch to 3/4 inch. Each of the plies can be trimmed to an appropriate configuration for insertion into the tool, one of the dimensions corresponding to the thickness of the section being parallel to the plane of the ply, and the thickness of the ply being perpendicular to the thickness of the section. The plies are inserted into the tool so that the ply thicknesses are substantially perpendicular to the thickness of the section. Stated differently, the felt plies are arranged as planes perpendicular to thickness "t" of the ceramic liner system (i.e. each felt layer is substantially parallel to the direction of hot gas flow in the exhaust and parallel to the centerline of the engine). If desired, the felt can be infiltrated with a slurry of matrix material, which may be done either before the block is cut or after the felt is cut into thin plies. In either embodiment, the thin plies are wet and in the green condition.

The cut felt plies can be assembled as layers into a tool having the shape, in the form of channels or volumetric regions adjacent to the truss structure. Each assembled layer has predetermined absorptivity. The assembled structure can be inserted into the channels or volumetric regions either in the green condition, or can be subsequently processed before insertion. Thus, they may be cured or sintered prior to insertion, if desired. If the tool is not in the shape of the channels or volumetric regions, the felt may require machining into the shape of the channels or volumetric regions may be required after removal from the tool. Machining may be accomplished in the green state, after curing or after sintering but before insertion into the channels or volumetric regions.

In one embodiment, once the felt layers are fabricated with the fibers of predetermined absorptivity, the felt layers may be joined together to form the high temperature absorbing structure. If the structure does not have the shape of the channels or the volumetric regions, the joined structure may then be machined into the appropriate shape(s).

The acoustic felt structures provide not only sound attenuation capabilities, but also thermal protection for underlying metallic surfaces to which it may be attached, allowing for the elimination of coatings, such as TBC coatings and possible complete elimination of metal exhaust liners. Generally, the CMC-loaded felt structures have densities that are significantly less than metal exhaust liners, and therefore provide less of a weight penalty to the aircraft while providing tailorable sound attenuation capabilities across the acoustic range.

Referring again to Figure 5, there is also shown an attachment device. While the attachment device is critical to the attachment of the CMC liner system to the duct when attachment is mechanical, it is not critical to the sound attenuation of CMC liner system 26 and the attachment device may have any configuration that attaches CMC liner system 26 to duct 12. As shown in Figure 5, a bolt 30 extends through an aperture in the truss structure and backplate 108. Bolt 30 extends through duct 12 to which it is attached securing cell 104 to duct 12. Bolt 30 butts against washer 32 which increases bearing area against pad region 116. Any other attachment device may be used. For example, washer 32 and bolt 30 may be combined as a single device in which the head of the bolt is formed in the shape of a washer. The attachment device is a high temperature material such as a superalloy material of nickel, iron, cobalt or combinations thereof.

Attachment of CMC liner system 26 directly to duct 12 alternatively may be by chemical means. In this embodiment, a high temperature chemical adhesive system is applied to one of the CMC liner system 26 or duct 12 and the CMC liner system and duct are cured to form an adhesive bond. As used herein, a high temperature chemical adhesive system includes any chemical serving an adhesive function that will attach CMC liner system 26 to duct 12 and adhere the CMC liner system 26 to duct 12 at the elevated temperatures experienced at the interface. Thus, the high temperature adhesive may include any adhesive designed for such high temperature applications or any other chemical that can be applied and cured while adhering the CMC liner system to the duct, such as a green silicon or green aluminosilicate composition which may be subsequently cured.

In an engine design, when a plurality of cells such as cells 104 are assembled to form a CMC liner system attached to a metal engine liner 22, in addition to attaching the cells 104 to duct 12 with attachment device, the cells are also adhesively attached to metal exhaust liner 22 with a high temperature adhesive. Cooling air from cooling air passageway 14 is provided to cells 104 by perforations (not shown) in metal exhaust liner 22 and backplate 108. Cooling air invariably carries sound waves generated by the engine. The cooling air is circulated through the porous acoustic fiber 120, which attenuates the sound waves carried by the cooling air as well as sound waves transferred through the metal engine liner 22. The cooling air can exit cells 104 by additional perforations in facesheet 106, allowing the cooling air to exit into the exhaust gas flow path. This air exiting through these perforations also provides transpiration cooling to facesheet 106. Also shown in Figure 5 is an optional cover 122 which may be assembled over cell 104. As shown in Figure 5, optional cover 122 is open at one end and is assembled over facesheet 106.

In an engine design, when a plurality of cells such as cells 104 are assembled to form a CMC liner system 26 and the CMC liner system may replace prior art metal liner systems, an additional CMC liner sheet 40 comprising at least two plies of CMC material is provided for attaching the cells 104. CMC liner sheet preferably is a continuous sheet, but may be comprised of one or more sheets formed together. Cells 104 are attached to CMC liner sheet. In one embodiment, the cells are adhesively attached to the liner sheet. CMC liner sheet 40 forms a flow path boundary surface for cooling air passageway 14. Without CMC liner sheet 40, a leak path between each of cells 104 may provide a path for cooling air from cooling air passageway to the exhaust flow path and such a leak path is undesirable. Each of the cells is also adhesively attached to CMC liner with a high temperature adhesive. As an alternative, green plies of CMC material may be inserted between cells 104. These plies of CMC material may be cured in-situ during engine operation. These pliable green plies after curing will seal any openings between cells 104 that could serve as a leak path for cooling air from passageway 14. Cooling air from cooling air passageway 14 is provided to cells 104 by perforations (not shown) in CMC liner 40 and backplate 108. The cooling air is circulated through the acoustic porous felt 120, which interacts to attenuate sound waves propagated by the cooling air, thereby reducing the overall sound transmitted by the engine to its surrounding environment. The cooling air can exit cells 104 by additional perforations in facesheet 106, allowing the cooling air to exit into the exhaust gas flow path in the same manner as previously set forth.

A second construction of cells of CMC liner system 26 is set forth in Figure 6, which illustrates an assembly 202 of cells having a channel structure. A cross section of a channel cell 204 is depicted along section 7-7 and is shown in Figure 7. The channel cell construction is similar to that of the eggcrate cell construction in that it includes a facesheet 206, a backplate 208 and a truss structure. The actual construction of the truss structure of channel cell 204 utilizes a layer 212 of CMC material comprising at least two plies, and preferably four plies, extending from a first wall 214 to a second opposed wall 215. The layer 212 is formed so that it is substantially othogonal to first wall 214 and second wall 215, but angling downward toward backplate 208 at a preselected angle. Preferably, the preselected angle is in the range of 30-600 . The channel cell also includes a pad region 216 essentially identical to that set forth in eggcrate cell previously described so that layer 212 is parallel to backplate 208 in pad region 216, providing additional reinforcement for the attachment device. When additional walls are included perpendicular to first wall 214 and second wall 215 a box identical to box 118 for eggcrate cell 104 is formed to contain truss structure. However, a two wall structure with two opposed walls 214, 215 is preferred.

Referring again to Figures 6 and 7, the truss structure includes a first wall 214 and an opposed second wall 215. A layer 212 of CMC material extends from first wall 214 to second wall 215, extending at a preselected angle, preferably from 30-600, to contact backplate 208 providing a main channel 226 bounded by layer 212, backplate 208 and facesheet 206. A reinforcing pad region 216 reinforces backplate and partially extends along layer 212 contacting layer 212 in the region of backplate 208. Secondary channels 228 extend parallel to main channel 226 on the opposite side of layer 212 bounded by layer 212, backplate 208 and one of side walls 214, 215. Both main channel and secondary channel are filled with acoustic fiber as discussed above for eggcrate cell 104. Channel cells 204 are attached to the duct in the same manner as eggcrate cells 104. The main difference is that, in the preferred embodiment, channel cells 204 can be arranged so that the channels run parallel to the engine axis, and channels 226, 228 in adjacent cells can be arranged so that cooling air circulates to adjacent cells 204. In this arrangement, perforations advantageously are not required in every cell, and cooling air can enter the CMC liner system from cooling air passageway 14 at preselected locations and exit into the exhaust gas flow path at preselected locations.

When forming a predetermined felt structure using a mold, regardless of the method used to fill the mold, the mold includes apertures at one end that serve as drain ports. The apertures are connected to tubes, which in turn are connected to a vacuum system. A perforated plate (not shown) is inserted into the opposite end of the mold from the tubes, and an optional compressive force may be applied to the acoustic fibers. The compressed fibers in the mold are then dried to remove any residual water that may not have been removed during the process forming a workable felt. Even after such compression, the felt is still porous.

In one embodiment, as discussed, after drying, ceramic slurry then may be directed into the mold cavity. The slurry comprises submicron alumina particles, preferably SM8 in silicone. The fluidity of the slurry is adjusted with an evaporable solvent such as alcohol to allow it to infiltrate the porous felt. A preferred slurry composition includes about 210 g of SR-355 mixed with about 210 g of alumina SM8 and 375 ml of solvent. Additional solvent may be added, as for example, in a ratio of 7:3 with increasing alumina. Overall, the solvent is adjusted to provide the required fluidity for infiltration. The slurry percolates through the felt, and the fluidity of the slurry is adjusted to facilitate this percolation. The vacuum system is attached to the mold to draw slurry through the felt to fully infiltrate it, removing air pockets, and to remove excess slurry from the system. The ceramic slurry is directed over the dried felt repeatedly as necessary to ensure complete infiltration of the felt, but without completely eliminating the continuous linked porosity necessary for permeability for cooling air flow.

After the felt has been completely infiltrated with slurry, the felt may be removed from the mold dried and ultimately sintered at temperatures of about 160018000 F for a time sufficient to convert the alumina-silicone from a polymer to an alumino silicate in the form of a glass, glassy-ceramic or a ceramic, depending upon heat treatment temperature selected, thereby providing a system comprising acoustic fibers bonded in an aluminosilicate matrix with continuous linked porosity. Sintering can be accomplished in about an hour.

Alternatively, green, infiltrated felt may be inserted into the corresponding channels or cavities in cells 204 or cells 104 after the CMC materials forming cells 204 or cells 104 are cured, but before they are sintered. Additional thin plies of cut felt or chopped fiber may be inserted as necessary to fill any observed gaps in the channels or cavities and the felt may be sintered with cells 204 or cells 104.

As noted, the acoustic fiber may be inserted into cells 204, 104 after the plies forming the cells have been properly laid up in the green state or after the plies have been sintered. In addition, the acoustic fiber may be stuffed into the channels or regions of the cell either as dry fiber, machined felt, formed felt, cured felt or slurry infiltrated felt. A porous foam containing acoustic fiber also may be introduced into the cells. In one preferred method of construction, cells are laid- up in the green state, without the facesheet 106, 206 and cured at a temperature between 200-7000 F. The facesheet is laid up and cured. The acoustic fiber 120, 220 preferably incorporated into a slurry-infiltrated felt, a foam or cured felt, is inserted into cells 104, 204. Facesheet 106, 206 is then attached to cells 104, 204 using a high temperature adhesive. For a CMC structure utilizing an aluminosilicate matrix material, the assembled cell is then sintered at a temperature of at least 16000 F for at least 15 minutes. The sintering time is dictated by the temperature and the time at temperature required for converting the matrix material to a ceramic with desirable mechanical properties. It will be recognized by those skilled in the art that different matrix materials may require different temperatures and times at temperature. It will also be recognized by those skilled in the art that generally, firing a structure at higher temperatures requires less time to accomplish the matrix conversion. Perforations for cooling may be made in facesheet 106, 206 or backplate 108, 208 at any time, but preferably either after curing or after sintering. Apertures for attachment devices may be made at any time in the fabrication cycle. Apertures for attachment devices may be formed in backplate 108, 208 during layup, although subsequent drilling after insertion of acoustic fiber will subsequently be required. Thus, it is preferred that apertures for attachment devices be placed after curing cells 104, 204.

In any of the embodiments, the air-permeable acoustic materials fill eggcrate cells 104 or channel cells 204. The CMC liner system is attached to the engine duct 12 by a plurality of attachment devices. Cooling air, which also carries sound waves, is provided to prevent heat build-up in the CMC liner system 26. The sound waves carried by the cooling air are attenuated by contact with the acoustic material. Thus the acoustic material acts as both an attenuator and as an insulator. The CMC liner system 26 may be used in conjunction with a metal exhaust liner or may be used as a replacement for a metal exhaust liner. When used as a replacement for the metal exhaust liner, the CMC liner system further includes a CMC liner sheet 40 comprised of at least two plies of CMC material.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. A CMC liner system, comprising:
   a duct;
   a plurality of cells, each cell further comprising a high temperature structure having a fillable volume within the structure;
   a material having attenuation capabilities in the acoustic range occupying the fillable volume within the structure, and
   an attachment device securing each of the plurality of cells to the duct.
2. The CMC liner system of clause 1, wherein the attachment device includes a mechanical fastener system.
3. The CMC liner system of any preceding clause, wherein the mechanical fastener system includes a bolt and a washer, the bolt extending through each cell and the duct.
4. The CMC liner system of any preceding clause, wherein the attachment device includes a high temperature chemical adhesive system.
5. The CMC liner system of any preceding clause, wherein a passageway extends between the duct and the plurality of cells, the passageway forming a path for cooling air.
6. The CMC liner system of any preceding clause, further including a first set of apertures in the structure for channeling cooling air from the passageway into cells of the plurality of cells.
7. The CMC liner system of any preceding clause, including a second set of apertures in the structure for channeling cooling air out of the cells.
8. The CMC liner system of any preceding clause, wherein each cell further comprises;
   a ceramic matrix composite facesheet;
   a ceramic matrix composite backplate; and
   a ceramic matrix composite truss structure extending between the facesheet and the backplate and forming channels or volumetric regions between the facesheet and the backplate, the truss structure of each cell providing strength to the cell.
9. The CMC liner system of any preceding clause, wherein the material having attenuation capabilities in the acoustic range occupy the fillable volume within the structure include materials selected from the group consisting of acoustic fibers, felt, foam and combinations thereof.
10. The CMC liner system of any preceding clause, further including a metal liner between the duct and the plurality of cells, each cell adhesively attached to the metal liner.
11. The CMC liner system of any preceding clause, wherein the metal liner and cells of the plurality of cells include perforations providing a flow path for cooling air from a passageway extending between the duct and the metal liner.
12. The CMC liner system of any preceding clause, wherein the structure further includes a pad region comprising a plurality of composite matrix plies.
13. The CMC liner system of any preceding clause, wherein the ceramic matrix composite facesheet, the ceramic matrix composite backplate and the ceramic matrix composite truss structure comprise high temperature ceramic matrix composite materials survivable at temperatures of at least 18000 F.
14. The CMC liner system of any preceding clause, wherein the high temperature structure includes Ox-Ox materials.
15. The CMC liner system of any preceding clause, wherein the Ox-Ox materials include alumino silicate fibers or silicate fibers in a high temperature aluminosilicate or silicate matrix.
16. The CMC liner system of any preceding clause, wherein the acoustic fibers are chopped fibers selected from the group consisting of aluminosilicate fibers, silicon carbide fibers, alumina-mullite fibers, stainless steel wool, alkaline earth silica wool, polycrystalline wool, and combinations thereof.
17. The CMC liner system of any preceding clause, wherein the acoustic fibers occupying the fillable volume are mixed with fibers selected from the group consisting of silicate fibers, aluminosilicate fibers, fiberglass fibers, insulating fibers and combinations thereof to form a felt, the felt infiltrated with a matrix material.
18. The CMC liner system of any preceding clause, wherein the matrix material is selected from the group consisting of an aluminosilicate slurry, a silicon carbide slurry, a silicone slurry, a silicate slurry and combinations thereof.
19. The CMC liner system of any preceding clause, wherein the materials having sound absorption capabilities further comprise a plurality of layers, each layer having a different predetermined absorptivity.
20. The CMC liner system of any preceding clause, wherein the truss structure comprises at least two bowtie sections extending at preselected angles to one another and overlapping one another along the baseplate, the at least two bowtie sections further extending at a preselected angle between the backplate and the facesheet.
21. The CMC liner system of any preceding clause, further including sides extending between the facesheet and the backplate and wherein volumetric regions within each cell between the sides and the facesheet and the backplate are filled with acoustic material and a volumetric region within the truss structure is filled with acoustic material.
22. The CMC liner system of any preceding clause, wherein the truss structure includes a first wall and an opposed second wall, a layer of ceramic matrix composite material extending from the first wall to the second wall and extending at a preselected angle to contact the backplate, the layer of ceramic matrix composite material forming a main channel within the cell and a side channel adjacent to the first wall and the second wall, wherein the main channel and each side channel is filled with material having sound absorbing capabilities.
23. A method for forming an acoustic cell, comprising the steps of:
   forming a volume with a facesheet, a backplate, a truss structure and at least two optional sides extending between the backplate and the facesheet by laying up ceramic matrix composite plies;
   curing the composite matrix composite plies forming the volume bounded by a cured facesheet, backplate truss structure and optional sides;
   sintering the cured facesheet, backplate and truss structure; providing acoustic material having sound absorbing capabilities;
   inserting the acoustic material into the cell volume adjacent the truss structure, forming an assembly; and then
   sintering the assembly.
24. The method of any preceding clause, wherein acoustic material includes air-permeable acoustic fiber, air-permeable acoustic foam and air-permeable acoustic felt.
25. The method of any preceding clause, wherein the steps of forming, curing and sintering the facesheet, the backplate, the truss structure and the optional sides includes forming, curing and sintering the facesheet, the backplate the truss structure and the optional sides as individual components and further including the additional steps, after the step of sintering the cured facesheet, backplate, truss structure and optional sides but before inserting the acoustic material, of assembling the sintered truss structure, backplate and at least two optional sides with a high temperature ceramic adhesive and forming an open cell structure that includes channels or volume within the cell, and after inserting the acoustic material, adhering the sintered facesheet to the assembly opposite the backplate with a high temperature ceramic adhesive.
26. The method of any preceding clause, wherein the step of providing acoustic material includes providing acoustic fiber of preselected absorptivity.
27. The method of any preceding clause, further including the additional steps of forming the acoustic material as an acoustic felt including acoustic fiber by providing a preselected quantity of chopped acoustic fibers;
   thoroughly mixing the chopped acoustic fibers in a soapy solution of water; pouring the mixture into a mold;
   optionally adding a defoaming agent to the mixture;
   drying the mixture in the mold to form a porous felt;
   infiltrating the mixture with a ceramic matrix slurry; and
   removing the slurry-infiltrated fiber mixture from the mold.
28. The method of any preceding clause, further including the steps of stuffing the slurry infiltrated fiber mixture into the cell volume and curing before sintering.
29. The method of any preceding clause, wherein the mold is in the form of the channels or volumetric regions adjacent the truss structure, and the step of inserting includes adhering the slurry-infiltrated fiber mixture in cell volume with ceramic adhesive after removing the fiber mixture from the mold.
30. The method of any preceding clause, further includes machining the slurry-infiltrated fiber mixture to a shape of the cell volume and inserting the machined fiber mixture into the cell volume with ceramic adhesive.
31. The method of any preceding clause, wherein the step of infiltrating the mixture with a ceramic matrix slurry includes selecting a matrix material from the group consisting of an aluminosilicate slurry, a silicon carbide slurry, a silicone slurry, a silicate slurry and combinations thereof.
32. A method for forming a CMC cell, comprising the steps of:
   forming the cell with a facesheet, a backplate, a truss structure and at least two optional sides by laying up ceramic matrix composite plies, a volume extending within an interior of the cell between the composite matrix plies;
   curing the composite matrix plies forming a cured facesheet, backplate, truss structure and optional sides;
   providing material having sound absorbing capabilities;
   inserting the material having sound absorbing capabilities into the cell volume adjacent the truss structure, forming an assembly; and then
   sintering the assembly.
33. The method for forming the CMC cell of any preceding clause, wherein the steps of forming and curing the facesheet, the backplate, the truss structure and the optional sides includes forming and curing the facesheet, the backplate the truss structure and the optional sides as individual components and further includes the additional steps, after the step of curing the facesheet, the backplate, the truss structure and the optional sides, but before inserting the material having sound absorbing capabilities, of assembling the cured truss structure, backplate and at least two optional sides with a high temperature ceramic adhesive and forming an open cell structure that includes channels or volumetric regions adjacent the truss structure, and after inserting the material having sound absorbing capabilities, adhering the sintered facesheet to the assembly opposite the backplate with a high temperature ceramic adhesive.

## Claims

1. A CMC liner system (26), comprising:
a duct (12);
a plurality of cells (104), each cell further comprising a high temperature structure having a fillable volume within the structure;
a material (120) having attenuation capabilities in the acoustic range occupying the fillable volume within the structure, and
an attachment device securing each of the plurality of cells to the duct.

2. The CMC liner system of claim 1, wherein the attachment device includes a mechanical fastener system.

3. The CMC liner system of claim 2, wherein the mechanical fastener system includes a bolt and a washer, the bolt extending through each cell and the duct.

4. The CMC liner system of any preceding claim, wherein the attachment device includes a high temperature chemical adhesive system.

5. The CMC liner system of any preceding claim, wherein a passageway extends between the duct and the plurality of cells, the passageway forming a path for cooling air.

6. The CMC liner system of claim 5, further including a first set of apertures in the structure for channeling cooling air from the passageway into cells of the plurality of cells.

7. The CMC liner system of claim 6, including a second set of apertures in the structure for channeling cooling air out of the cells.

8. The CMC liner system of any preceding claim, wherein each cell further comprises;
a ceramic matrix composite facesheet;
a ceramic matrix composite backplate; and
a ceramic matrix composite truss structure extending between the facesheet and the backplate and forming channels or volumetric regions between the facesheet and the backplate, the truss structure of each cell providing strength to the cell.

9. The CMC liner system of any preceding claim, wherein the material having attenuation capabilities in the acoustic range occupy the fillable volume within the structure include materials selected from the group consisting of acoustic fibers, felt, foam and combinations thereof.

10. The CMC liner system of any preceding claim, further including a metal liner between the duct and the plurality of cells, each cell adhesively attached to the metal liner.

11. The CMC liner system of claim 10, wherein the metal liner and cells of the plurality of cells include perforations providing a flow path for cooling air from a passageway extending between the duct and the metal liner.

12. The CMC liner system of any preceding claim, wherein the structure further includes a pad region comprising a plurality of composite matrix plies.

13. The CMC liner system of any preceding claim, wherein the ceramic matrix composite facesheet, the ceramic matrix composite backplate and the ceramic matrix composite truss structure comprise high temperature ceramic matrix composite materials survivable at temperatures of at least 18000 F.

14. The CMC liner system of any preceding claim, wherein the high temperature structure includes Ox-Ox materials.

15. A method for forming an acoustic cell (104), comprising the steps of:
forming a volume with a facesheet (106), a backplate (108), a truss structure and at least two optional sides extending between the backplate and the facesheet by laying up ceramic matrix composite plies;
curing the composite matrix composite plies forming the volume bounded by a cured facesheet, backplate truss structure and optional sides;
sintering the cured facesheet, backplate and truss structure;
providing acoustic material (120) having sound absorbing capabilities;
inserting the acoustic material into the cell volume adjacent the truss structure, forming an assembly; and then
sintering the assembly.
